Europäisches Patentamt

European Patent Office

Office européen des brevets

(19)

(11) Numéro de publication: **0 047 683**
A1

## (12) DEMANDE DE BREVET EUROPEEN

(21) Numéro de dépôt: **81401282.9**

(51) Int. Cl.³: **H 04 L 1/10**

(22) Date de dépôt: **10.08.81**

(30) Priorité: **21.08.80 FR 8018258**

(43) Date de publication de la demande: **17.03.82**
**Bulletin 82/11**

(84) Etats contractants désignés: **AT BE CH DE GB IT LI LU NL SE**

(71) Demandeur: **SOCIETE ANONYME DE TELECOMMUNICATIONS, 40 avenue de New York, F-75116 Paris (FR)**

(72) Inventeur: **Le Fort, Gilbert Jean, Ker Bilhoat, F-22300 Lannion (FR)**
Inventeur: **du Chaffaut, Guy Marie, 12 Allée de l'Alouette, F-22730 Tregastel (FR)**

(74) Mandataire: **Bloch, Robert et al, 39 avenue de Friedland, F-75008 Paris (FR)**

(54) **Dispositif de détection d'erreurs d'un signal en code ternaire.**

(57) La présente invention se rapporte à la détection d'erreurs de transmission en ligne sur un signal codé en code bipolaire.

Le système comprend essentiellement un circuit intégrateur analogique conservant en mémoire la polarité de la dernière impulsion transmise et un circuit sélecteur isolant les erreurs par comparaison avec un potentiel de référence.

Application à d'autre codes, par exemple au code HDB.

EP 0 047 683 A1

## Dispositif de détection d'erreurs d'un signal en code ternaire

La présente invention se rapporte à la détection d'erreurs de transmission en ligne sur un signal codé en code ternaire.

Les codes ternaires sont bien connus. Parmi les divers codes ternaires, le code bipolaire consiste essentiellement à représenter un "zéro" par une tension positive ou négative, de façon alternée, de telle sorte que la tension continue moyenne du signal transmis soit nulle.

Dans un système de transmission muni d'un dispositif de télésurveillance il est nécessaire de détecter les erreurs de transmission à chaque point de régénération afin d'apprécier la qualité de chaque répéteur. Les répéteurs étant télé-alimentés, le circuit détecteur d'erreurs doit avoir une consommation aussi réduite que possible.

Des dispositifs de détection des erreurs sur un signal bipolaire sont déjà connus, notamment par le brevet américain 3 048 819. Un dispositif classique comprend un circuit logique bistable conservant l'état du dernier "1" (positif ou négatif) et un circuit de comparaison permettant de détecter deux "1" consécutifs de même sens.

Ces dispositifs cependant conduisent à une consommation de courant excessive due aux circuits logiques à grande vitesse quand on les applique aux systèmes à débit numérique élevé.

Le dispositif de détection d'erreurs de l'invention comporte des premiers moyens analogiques pour intégrer le signal et conserver en mémoire la polarité de la dernière impulsion transmise, des seconds moyens pour comparer le signal issu desdits premiers moyens à au moins un seuil, lesdits seconds moyens fournissant un signal binaire d'erreurs.

Selon une première caractéristique de l'invention, les premiers moyens d'intégration sont formés de deux diodes montées en parallèle et inversées, placées en série avec un circuit de charge d'un condensateur et un circuit de décharge de ce même condensateur, la constante de temps de décharge étant très supérieure à la constante de temps de charge.

Selon une autre caractéristique les premiers moyens sont formés de deux commutateurs de courant de type de conductivité opposée qui chargent et déchargent un condensateur.

Selon une autre caractéristique, chaque commutateur de courant est formé de deux transistors de même type de conductivité $(T_1, T_2)$, leurs émetteurs étant réunis et reliés à la source de courant, leurs collecteurs étant portés pour l'un à la masse, pour l'autre audit condensateur, la base de ce dernier recevant le signal d'entrée.

Selon une autre caractéristique de l'invention les seconds moyens sont formés de deux circuits à seuil, l'un pour les impulsions positices, l'autre pour les impulsions négatives, placés en parallèle et réunis par un circuit logique OU, lesdits seuils étant choisis égaux à la grandeur d'une impulsion.

Les seconds moyens de l'invention peuvent également consister en deux diodes placées en parallèle et inversées chacune d'elles étant raccordée à un enroulement primaire d'un transformateur, l'autre borne desdits enroulements étant portée à la masse, l'enroulement secondaire dudit transformateur appliquant le signal transmis par lesdits enroulements primaires et redressé à l'entrée d'un circuit comparateur qui par comparaison avec une tension de référence fournit un signal d'erreur.

Un tel dispositif présente le grand avantage de consommer très peu de courant, quatre à cinq fois moins qu'un circuit logique habituel.

Un tel dispositif est aisément applicable à la détection d'erreurs dans tout code, par exemple un code HDB (High density bipolar) ou tout code comportant des impulsions alternées et en particulier dont le nombre d'impulsions consécutives de même polarité est borné.

D'autres avantages et caractéristiques apparaîtront à la lecture de la description suivante illustrée par des dessins.

La figure 1 est une représentation schématique du dispositif de l'invention.

La figure 2 est un diagramme des signaux, dans le cas où s'est insérée une erreur positive E de code.

La figure 3 est un diagramme des signaux $S_C$ et $S_D$ dans le cas où deux erreurs positive et négative se succèdent.

La figure 4 est une représentation détaillée du dispositif préféré de l'invention.

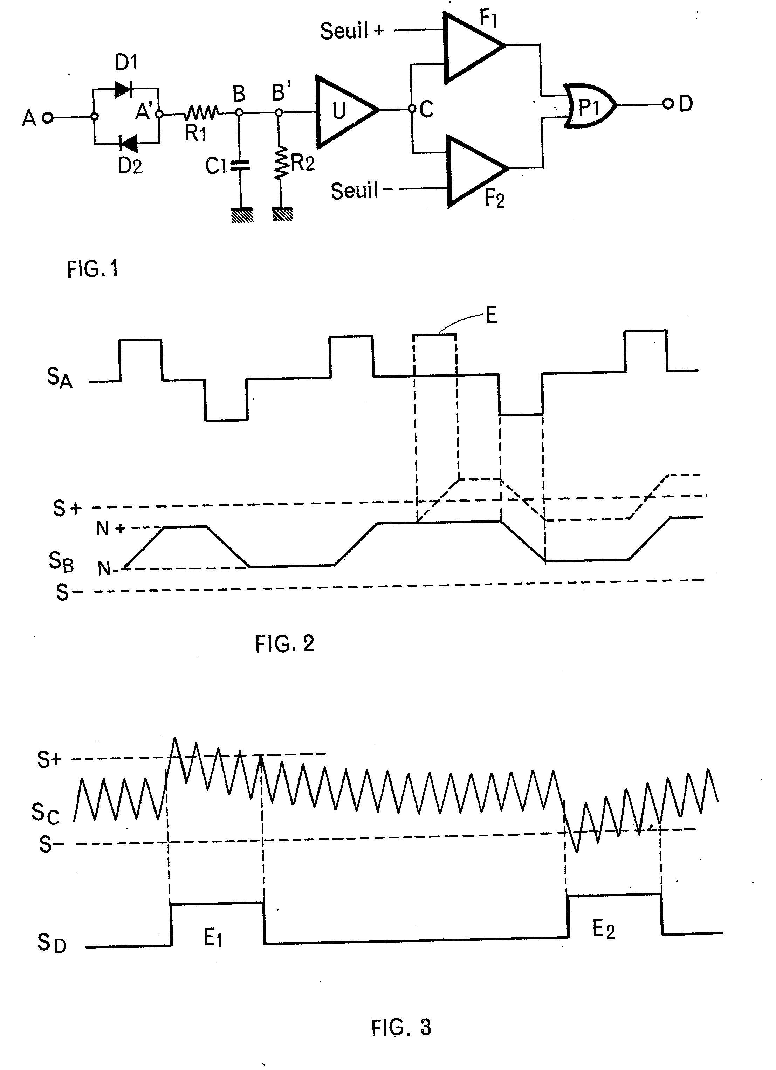

En se référant à la figure 1 le signal S bipolaire, formé d'une succession d'impulsions négatives et positives est appliqué à l'entrée A du dispositif détecteur d'erreurs. Entre le point A d'entrée et un point A' deux diodes $D_1$ et $D_2$ sont montées en parallèle et tête bêche. En effet la cathode de la diode $D_1$ est raccordée au point A' tandis que celle de la diode $D_2$ est raccordée au point A.

La diode $D_1$ (resp. $D_2$) transmet l'impulsion positive (resp. négative) du signal $S_A$ d'entrée. Entre le point A' et un point B est insérée en série une résistance $R_1$ qui

détermine la constante de temps de charge de la capacité $C_1$. La capacité $C_1$ est reliée d'une part à la terre, de l'autre côté au point B. Les valeurs de $R_1$ et $C_1$ sont choisies de telle sorte que la constante de temps $R_1 C_1$ soit égale à la durée de plusieurs impulsions ainsi qu'il sera plus amplement expliqué ultérieurement.

Entre le point B et un point C est inséré, en série avec les diodes $D_1$, $D_2$ et la résistance $R_1$, un amplificateur U. Entre le point B et l'entrée de l'amplificateur U, en un point B', on place entre le point B' et la terre une résistance $R_2$. Au point C de sortie de l'amplificateur on place en parallèle deux circuits à seuil $F_1$ et $F_2$. Une entrée du circuit à seuil $F_1$ (resp. $F_2$) est raccordée à une tension positive (resp. négative) déterminant un seuil positif (resp. négatif); l'autre entrée du circuit à seuil est raccordée au point C. Les sorties des circuits à seuils $F_1$ et $F_2$ sont chacune appliquées à une entrée d'une porte $P_1$ qui est une porte OU, donnant une impulsion pour chaque erreur à sa sortie, par exemple en un point D.

La figure 2 illustre le fonctionnement du dispositif de la figure 1. Le signal d'entrée $S_A$ se compose d'impulsions positives et négatives qui sont transmises alternativement par la diode $D_1$ et par la diode $D_2$. A chaque impulsion positive le condensateur $C_1$ se charge d'une quantité de courant proportionnelle à la durée de l'impulsion. De même, à chaque impulsion négative, le condensateur $C_1$ se décharge de la même quantité de courant puisque les impulsions sont de même grandeur. On choisit une impédance $R_2$ de décharge très grande de telle sorte qu'entre deux impulsions positives par exemple la décharge du condensateur soit très faible.

Tant que les impulsions sont de signes alternés, on a à l'entrée de l'amplificateur U, en B' par exemple, un

5

0047683

signal $S_B$ oscillant entre deux niveaux bien déterminés $N^+$ et $N^-$. Comme l'amplitude de ce signal $S_B$ est assez faible pour que les deux diodes $D_1$ et $D_2$ soient bloquées entre deux impulsions, on retrouve à la sortie de l'amplificateur U sensiblement un signal $S_C$ de même forme que $S_B$.

Supposons qu'une erreur E, dessinée en pointillés, s'insère sur le signal $S_A$, par exemple qu'une impulsion positive s'insère entre une impulsion positive et une impulsion négative, le signal $S_B$ est déplacé dans le sens positif du niveau moyen du signal $S_B$ au point B; ce déplacement est à peu près égal à l'amplitude du signal obtenu en l'absence d'erreur. Le signal $S'_C$ obtenu à la sortie C de l'amplificateur U est sensiblement de même forme que le signal $S_C$ mais décalé vers les valeurs positives de la valeur égale au déplacement. Ce décalage du signal $S'_C$ vers les valeurs positives se maintient un temps non négligeable du fait de la grandeur $R_2 C_1$ de la constante de temps de décharge. On se souvient que l'impédance de décharge $R_2$ a été choisie très grande, de telle sorte qu'entre deux impulsions la décharge du condensateur soit très faible.

En particulier la constante de temps de décharge $R_2 C_1$ est très grande devant la constante de temps de charge $R_1 C_1$.

$$R_2 C_1 \gg R_1 C_1$$

De ce fait les comparateurs $F_1$ et $F_2$ comparent l'amplitude du signal $S'_C$ aux grandeurs seuil positif $S^+$ et seuil négatif $S^-$. Tout dépassement du seuil négatif ou du seuil positif se traduit par un signal à la sortie des comparateurs $F_1$ et $F_2$ qui sont associés à des circuits intégrateurs, non représentés sur la figure, éliminant les composantes haute fréquence. A la sortie de la porte OU $(P_1)$,

au point D on obtient un signal donnant une impulsion pour chaque erreur, positive ou négative. En se référant à la figure 3, deux erreurs différentes peuvent s'insérer sur le signal transmis en ligne. Supposons d'une part que le signal Sc soit entaché de composantes haute fréquence, d'autre part qu'une première erreur El s'insère sur le signal $S_A$, alors au point C, le signal Sc est décalé vers les valeurs positives et en particulier présente une amplitude supérieure à celle du seuil $S^+$ du comparateur F1. Le comparateur F1 écrête le signal Sc et, étant associé à un circuit intégrateur, reconnaît la valeur moyenne de l'erreur. De la même façon l'erreur négative $E_2$ est détectée et transmise par le comparateur F2 par comparaison avec le seuil $S^-$. En D, à la sortie de la porte (OU) P1 on obtient le signal $S_D$ d'erreurs qui est un signal binaire égal à 1 pour une erreur et à 0 entre les erreurs.

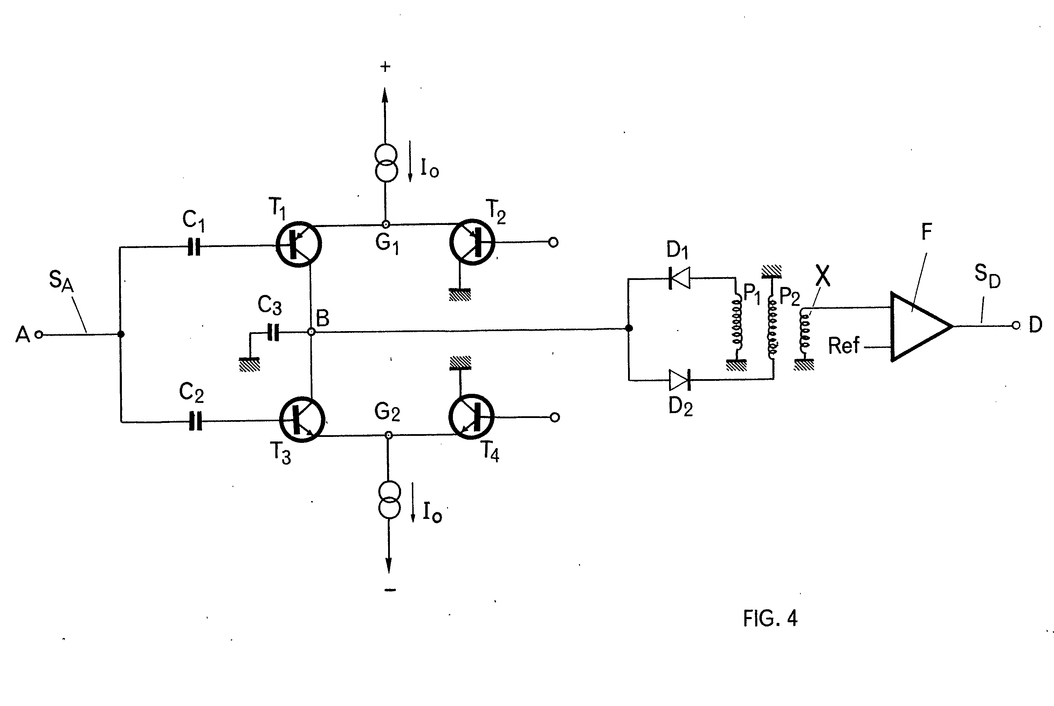

La figure 4 représente un mode préféré de réalisation de l'invention.

Le signal $S_A$ de ligne appliqué en A est le signal ternaire éventuellement entaché d'erreurs. Deux condensateurs C1 et C2 placés en parallèle sont raccordés d'une part au point A où ils reçoivent le signal $S_A$ et d'autre part à la base des transistors T1 et T3 respectivement. Les transistors T1 et T3 jouent le rôle de commutateurs de courant commandés par le signal d'entrée $S_A$ en association avec les deux transistors T2 et T4. Les transistors T1 et T3 sont du type p n p tandis que les transistors T2 et T4 sont de type n p n. Les collecteurs des transistors T1 et T3 sont reliés en un point B chacun à une borne d'un condensateur C3 dont l'autre borne est portée à la masse. L'émetteur des transistors T1 et T3 est relié à une source de courant en un point $G_1$ et $G_2$ respectivement. Le point $G_1$ est porté à un potentiel positif tandis que le point $G_2$ à un potentiel négatif.

L'émetteur du transistor T2 (resp. T4) est également raccordé en G1 (resp. G2) au potentiel positif (resp. négatif). Les collecteurs des transistors T2 et T4 sont portés à la masse. La base des transistors T2 et T4 est portée à un potentiel de polarisation convenablement choisi, par exemple une tension continue fonction de l'amplitude du signal d'entrée. En l'absence d'impulsion dans le signal $S_A$ d'entrée, les transistors $T_2$ et $T_4$ sont conducteurs et les transistors $T_1$ et $T_3$ sont bloqués.

Lorsque le signal $S_A$ comporte une impulsion positive, les transistors $T_1$ et $T_4$ deviennent conducteurs et les transistors $T_2$ et $T_3$ sont bloqués. Le courant $I_o$ traverse le transistor $T_1$ et charge le condensateur $C_3$. En présence d'une impulsion négative les transistors $T_3$ et $T_2$ sont conducteurs et les transistors $T_1$ et $T_4$ sont bloqués et le condensateur $C_3$ se décharge du courant $I_o$ à travers le transistor $T_3$. De tels moyens intégrateurs permettent de charger le condensateur $C_3$ à courant constant $I_o$ en s'affranchissant de l'amplitude des impulsions du signal $S_A$.

Quand les transistors $T_1$ ou $T_3$ sont conducteurs, le condensateur $C_3$ est chargé ou déchargé par le courant $I_o$ et la charge du condensateur $C_3$ est proportionnelle à la durée des impulsions de commande du signal $S_A$ et non à leur amplitude. Au point B sont raccordées en parallèle la cathode d'une diode $D_1$ et l'anode d'une diode $D_2$. L'anode de la diode $D_1$ est raccordée à un enroulement primaire $P_1$ dont l'autre borne est portée à la masse. La cathode de la diode $D_2$ est raccordée à un enroulement primaire dont l'autre borne est portée à la masse.

Les deux diodes $D_1$ et $D_2$ rendues conductrices par les dépassements consécutifs aux erreurs négatives et positives respectivement, constituent le circuit de détection proprement dit.

Les deux enroulements $P_1$ et $P_2$ sont les primaires d'un transformateur Tr qui comporte un enroulement secondaire X

0047683

recevant les impulsions transmises par les deux enroulements primaires. Ces deux enroulements primaires sont montés en inverse si bien que l'on obtient aux deux bornes de l'enroulement X secondaire des impulsions de même sens, redressées. Cet enroulement X secondaire est monté entre la masse et la borne d'un comparateur F. L'autre borne de ce comparateur F est portée à un potentiel de référence. Tout dépassement positif de tension est alors transmis à la sortie D de ce comparateur F sous la forme d'un signal $S_D$ de même type que le signal Sd de la figure 3.

Le dispositif d'intégration de la figure 4, formé de deux commutateurs de courant à transistors complémentaires chargeant et déchargeant un condensateur serait également réalisable d'une autre manière sans s'écarter du système détecteur d'erreurs de l'invention.

Le dispositif de l'invention présente de nombreux avantages tels qu'une faible consommation de courant.

La présente invention a été décrite dans le cas d'un code bipolaire; cependant le dispositif de détection d'erreurs de l'invention s'appliquerait également au code HDB et à tout code dont le nombre d'impulsions est alterné et surtout dont le nombre d'impulsions consécutives de même polarité est borné. Alors les moyens d'intégration seraient sensiblement les mêmes, mais au point B les moyens de comparaison seraient donnés pour tout dépassement à ces n niveaux au lieu de deux niveaux.

L'invention serait également applicable au code 4B 3T sans modification importante.

9                    0047683

Revendications

1. Dispositif de détection d'erreurs d'un signal en code ternaire caractérisé par le fait qu'il comporte des premiers moyens analogiques pour intégrer le signal et conserver en mémoire la polarité de la dernière impulsion transmise, des seconds moyens pour comparer le signal issu desdits premiers moyens à au moins un seuil, lesdits seconds moyens fournissant un signal binaire d'erreurs.

2. Dispositif selon la revendication 1 caractérisé par le fait que lesdits premiers moyens d'intégration sont formés de deux diodes montées en parallèle et inversées, placées en série avec un circuit de charge d'un condensateur et un circuit de décharge de ce même condensateur, la constante de temps de décharge étant très supérieure à la constante de temps de charge.

3. Dispositif selon la revendication 1 caractérisé par le fait que lesdits premiers moyens sont formés de deux commutateurs de courant de type de conductivité opposée qui chargent et déchargent un condensateur à courant constant.

4. Dispositif selon la revendication 3 caractérisé par le fait que chaque commutateur de courant est formé de deux transistors de même type de conductivité (T1, T2), leurs émetteurs étant réunis et reliés à la source de courant, leurs collecteurs étant portés pour l'un à la masse, pour l'autre audit condensateur, la base de ce dernier recevant le signal d'entrée.

5. Dispositif selon la revendication 1 caractérisé par le fait que lesdits seconds moyens consistent en deux circuits à seuil, l'un pour les impulsions positives, l'autre pour les impulsions négatives, placés en parallèle et réunis par un circuit logique OU, lesdits seuils étant choisis égaux à la grandeur d'une impulsion.

0047683

6. Dispositif selon la revendication 1 caractérisé par le fait que lesdits seconds moyens consistent en deux diodes placées en parallèle et inversées, chacune d'élles étant raccordée à un enroulement primaire d'un transformateur, l'autre borne desdits enroulements primaires étant portée à la masse, l'enroulement secondaire dudit transformateur appliquant le signal transmis par lesdits enroulements primaires et redressé à l'entrée d'un circuit comparateur qui par comparaison avec une tension de référence fournit un signal d'erreur.

FIG. 1

FIG. 2

FIG. 3

FIG. 4

| Catégorie | Citation du document avec indication, en cas de besoin, des parties pertinentes | Revendication concernée |
|---|---|---|
| AD | US - A - 3 048 819 (HELDER)<br>* Revendication 1 * | 1-6 |
| | -- | |
| A | MARCONI INSTRUMENTATION, vol. 12, no. 4, décembre 1969,<br>Herts, GB<br>A.N. RAMSDEN: "PCM Testing techniques", pages 73-79<br>* Figure 9 * | 1-6 |
| | ---- | |

## DOCUMENTS CONSIDERES COMME PERTINENTS

**CLASSEMENT DE LA DEMANDE (Int. Cl.³)**

H 04 L 1/10

**DOMAINES TECHNIQUES RECHERCHES (Int. Cl.³)**

H 04 L 1/00
       1/10
       1/20
H 04 L 25/49

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-12-1981 | GEISLER |